# EUROPEAN PATENT APPLICATION

(11) **EP 4 151 455 A1**
(43) Date of publication of application: **22.03.2023**
(21) Application number: 22196185.7
(22) Date of filing: 16.09.2022
(51) Int. Cl.: B60L 53/16, B60L 53/302

(54) **FEMALE TERMINAL AND TERMINAL CONNECTION STRUCTURE**

(30) Priority: 17.09.2021 JP 2021152196
(71) Applicant: Toyota Jidosha Kabushiki Kaisha, Aichi-Ken Aichi 471-8571 (JP)
(72) Inventor: KAWAHARA, Hisato, Toyota-shi, 471-8571 (JP)
(74) Representative: D Young & Co LLP

(57) **Abstract**

A female terminal (20) connectable to a male terminal (10) is provided. At least one of the male terminal (10) and the female terminal (20) is coolable by a coolant. The female terminal (20) includes a female terminal body (100) electrically connectable to the male terminal (10), and a heat transfer member (200) that transfers cold of the coolant. The female terminal body (100) includes a space forming portion (120) forming a receiving space (S) that receives the male terminal (10), and a contact portion (130) protruding from the space forming portion (120) and coming into electrical contact with the male terminal (10). The heat transfer member (200) is electrically insulating and disposed in the receiving space (S), and comes into thermal contact with the male terminal (10) and the space forming portion (120) when the male terminal (10) is inserted in the receiving space (S).

## Description

This nonprovisional application is based on Japanese Patent Application No. 2021-152196 filed on September 17, 2021 with the Japan Patent Office, the entire contents of which are hereby incorporated by reference.

### BACKGROUND

### Field

The present disclosure relates to a female terminal and a terminal connection structure.

### Description of the Background Art

A connection portion where a charging connector of a facility and a charging inlet of a vehicle are connected to each other generates heat due to contact resistance during electric current passage. This is particularly noticeable when rapid charging is performed with a high electric current (for example, 400 A). Therefore, the charging connector or the charging inlet may be cooled by a coolant such as water. For example, Japanese Patent Laying-Open No. 2019-192446 discloses a connector with a female terminal including a cooling mechanism.

### SUMMARY

It is desirable for a connector such as described in Japanese Patent Laying-Open No. 2019-192446 to have high cooling performance. Such high cooling performance should be provided not only during electric current passage between a charging inlet and a charging connector, but also for a variety of connection structures where a male terminal and a female terminal are connected to each other.

An object of the present disclosure is to provide a female terminal capable of achieving enhanced cooling performance.

A female terminal according to an aspect of the present disclosure is a female terminal connectable to a male terminal, at least one of the male terminal and the female terminal being coolable by a coolant, the female terminal including: a female terminal body electrically connectable to the male terminal; and a heat transfer member that transfers cold of the coolant, wherein the female terminal body includes a space forming portion forming a receiving space that receives the male terminal, and a contact portion protruding from the space forming portion into the receiving space, and coming into electrical contact with the male terminal, and the heat transfer member is electrically insulating and disposed in the receiving space, and comes into thermal contact with the male terminal and the space forming portion when the male terminal is inserted in the receiving space.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows charging of a vehicle.
Fig. 2 is a sectional view schematically showing a connection structure where a male terminal and a female terminal are connected to each other.
Fig. 3 is a sectional view along the line III-III shown in Fig. 2.
Fig. 4 is a front view of a heat transfer member.
Fig. 5 is a sectional view along the line V-V shown in Fig. 4.
Fig. 6 is a sectional view schematically showing a variation of the female terminal.

### DESCRIPTION OF THE PREFERRED EMBODIMENTS

An embodiment of the present disclosure will be described with reference to the drawings. In the drawings referenced below, the same or corresponding components are indicated by the same numerals.

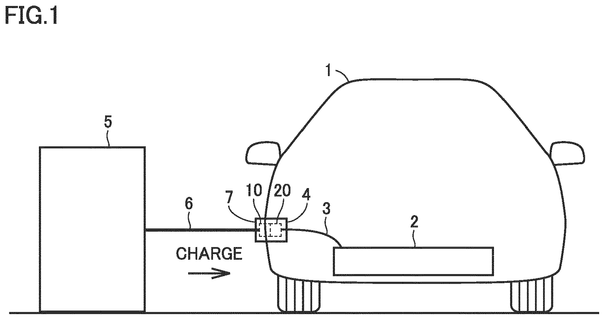

Fig. 1 schematically shows charging of a vehicle. A vehicle 1 is an electric vehicle, for example.

Vehicle 1 has a power storage device 2 and a charging inlet 4. Power storage device 2 includes a plurality of power storage cells. Charging inlet 4 is connected to power storage device 2 via a cable 3. Charging inlet 4 has a pair of female terminals 20, and a casing (not shown) for holding the pair of female terminals 20.

Charging to power storage device 2 is made possible by connecting, to charging inlet 4 of this vehicle 1, a charging connector 7 connected to a facility 5 such as a charging station via a cable 6. Charging connector 7 has a pair of male terminals 10, and a housing (not shown) for holding the pair of male terminals 10.

At least one of female terminals 20 of charging inlet 4 and male terminals 10 of charging connector 7 is coolable by a coolant (such as cooling water). In the present embodiment, male terminals 10 are coolable. In other words, charging connector 7 is a so-called liquid-cooled charging connector. The coolant flows between facility 5 and charging connector 7 via cable 6.

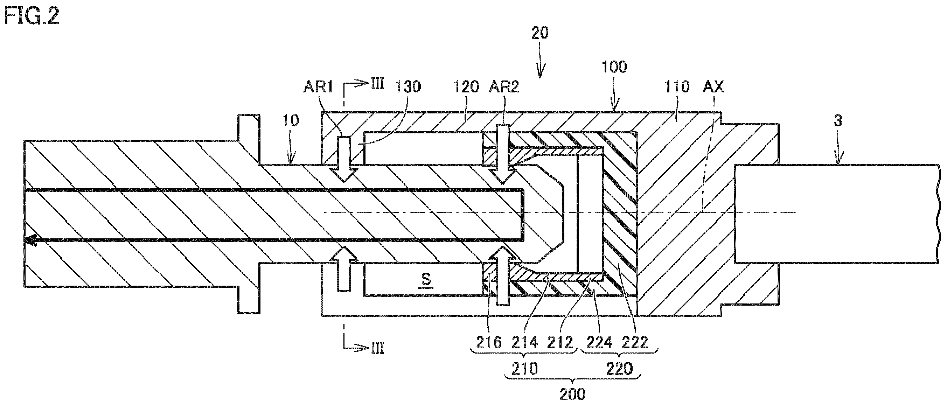

Fig. 2 is a sectional view schematically showing a connection structure where the male terminal and the female terminal are connected to each other. Male terminal 10 is formed like a column. The coolant flowing through male terminal 10 is indicated by arrows in Fig. 2. Charging connector 7 may be based on the ChaoJi standard.

Female terminal 20 is connectable to male terminal 10. Female terminal 20 has a female terminal body 100 and a heat transfer member 200.

Female terminal body 100 is electrically connectable to male terminal 10. Female terminal body 100 forms an electric current path when connected to male terminal 10. Female terminal body 100 has a connection portion 110, a space forming portion 120, and contact portions 130.

Connection portion 110 is a portion that is connected to cable 3. Connection portion 110 is formed like a column. However, connection portion 110 is not limited to be shaped like a column.

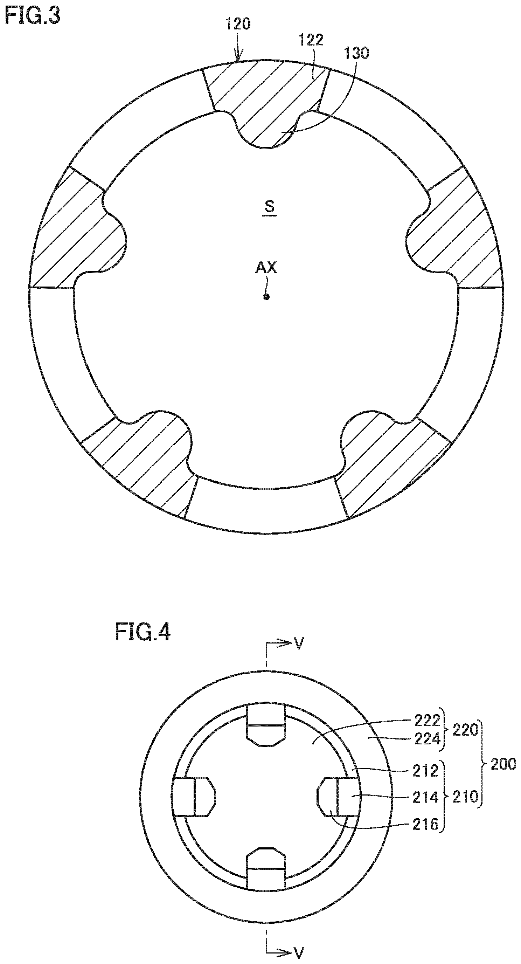

Space forming portion 120 forms a receiving space S that receives male terminal 10. Space forming portion 120 is continuous with connection portion 110. Specifically, space forming portion 120 extends from connection portion 110 along a direction parallel to a central axis AX of connection portion 110. As shown in Fig. 3, space forming portion 120 has a plurality of contact pieces 122 spaced from one another around central axis AX. In the present embodiment, space forming portion 120 has five contact pieces 122 spaced at regular intervals around central axis AX. The number of contact pieces 122 is not limited to five, however. Each contact piece 122 can come into contact with male terminal 10. Each contact piece 122 is elastically deformable such that its tip portion shifts in the radial direction of a circle around central axis AX with respect to its base portion (a connection portion where contact piece 122 and connection portion 110 are connected to each other).

Contact portions 130 are portions that come into contact with male terminal 10. Contact portions 130 protrude from space forming portion 120 into receiving space S. As shown in Fig. 3, an inner edge of each contact portion 130 in the radial direction has a curved shape protruding toward central axis AX.

Heat transfer member 200 is a member for transferring the cold of the coolant to a counterpart terminal (female terminal body 100 in the present embodiment). More specifically, heat transfer member 200 is a member for transferring the cold of the coolant to female terminal body 100 during electric current passage between male terminal 10 and female terminal body 100 by increasing points of contact with male terminal 10. Heat transfer member 200 is disposed in receiving space S. Heat transfer member 200 can come into thermal contact with male terminal 10 and female terminal body 100. Heat transfer member 200 is electrically insulating. Heat transfer member 200 comes into thermal contact with male terminal 10 and space forming portion 120 when male terminal 10 is inserted in receiving space S. Heat transfer member 200 has an inner member 210 and an outer member 220.

Inner member 210 comes into contact with male terminal 10. Inner member 210 is made of metal. Inner member 210 has an annular portion 212, a plurality of flexible pieces 214, and contact portions 216.

Annular portion 212 is annularly formed. Annular portion 212 has an outer diameter smaller than the inner diameter of space forming portion 120.

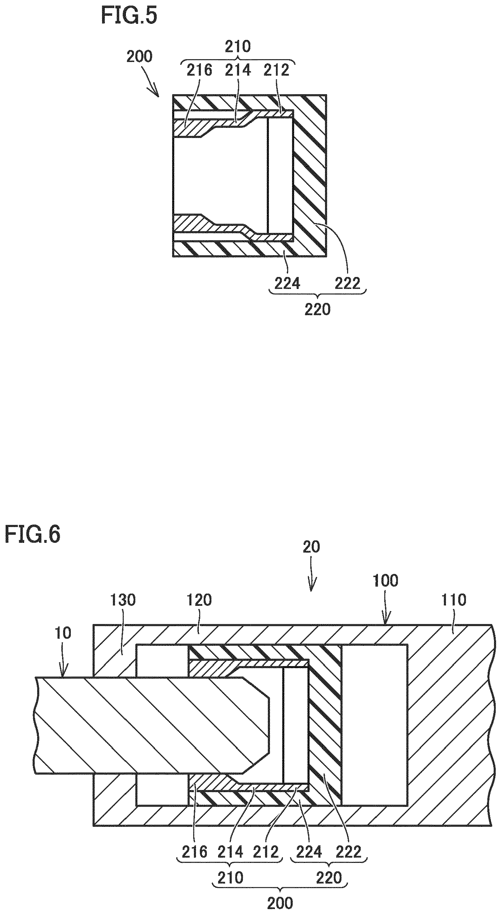

The plurality of flexible pieces 214 extend from annular portion 212 along a direction parallel to a central axis of annular portion 212. As shown in Fig. 4, the plurality of flexible pieces 214 are spaced from one another around the central axis. In the present embodiment, the plurality of flexible pieces 214 have four flexible pieces 214 spaced at regular intervals around the central axis. The number of flexible pieces 214 is not limited to four, however. Each flexible piece 214 is elastically deformable such that its tip portion shifts in the radial direction of a circle around the central axis with respect to its base portion (a connection portion where flexible piece 214 and annular portion 212 are connected to each other). As shown in Fig. 5, when male terminal 10 is not inserted in each flexible piece 214, the tip portion of each flexible piece 214 is located closer to the central axis than the base portion of this flexible piece 214.

Each contact portion 216 protrudes from the tip portion of each flexible piece 214 toward the central axis of annular portion 212. Each contact portion 216 is a portion that comes into contact with male terminal 10.

Outer member 220 is interposed between inner member 210 and space forming portion 120. Outer member 220 prevents contact between inner member 210 and space forming portion 120. Outer member 220 is made of an electrically insulating material (such as polybutylene terephthalate or ceramics). Outer member 220 has a bottom wall 222 and a circumferential wall 224.

Bottom wall 222 is formed like a disc. Bottom wall 222 is disposed between male terminal 10 and connection portion 110. In the present embodiment, bottom wall 222 is fixed to connection portion 110.

Circumferential wall 224 is continuous with a perimeter portion of bottom wall 222. Circumferential wall 224 is shaped to extend from the perimeter portion of bottom wall 222 away from connection portion 110 in a direction parallel to a central axis of bottom wall 222. Circumferential wall 224 is cylindrically formed. Circumferential wall 224 surrounds inner member 210 entirely in the circumferential direction. Circumferential wall 224 has an outer circumferential surface in contact with an inner surface of space forming portion 120.

Contact resistance between male terminal 10 and space forming portion 120 with heat transfer member 200 interposed therebetween is more than or equal to 100 times as large as contact resistance between male terminal 10 and contact portion 130 without heat transfer member 200 interposed therebetween. During electric current passage, therefore, an electric current flows substantially only through male terminal 10 and contact portion 130. The contact resistance between male terminal 10 and space forming portion 120 with heat transfer member 200 interposed therebetween is adjusted by the material and thickness of heat transfer member 200.

As described above, since female terminal 20 of the present embodiment includes heat transfer member 200 that comes into thermal contact with male terminal 10 and space forming portion 120, the cold of the coolant is transferred to the counterpart terminal through heat transfer member 200 during electric current passage between male terminal 10 and female terminal body 100. In other words, heat generated at male terminal 10 and contact portion 130 during electric current passage is transferred from contact portion 130 to male terminal 10 as indicated by arrows AR1, and is also transferred from space forming portion 120 to male terminal 10 through heat transfer member 200 as indicated by arrows AR2. Cooling performance is thereby enhanced.

In the embodiment described above, heat transfer member 200 may be disposed in receiving space S such that bottom wall 222 is spaced from connection portion 110, as shown in Fig. 6.

While male terminal 10 is coolable as an example in the embodiment described above, female terminal 20 may be coolable.

The connection structure where male terminal 10 and female terminal 20 are connected to each other in the embodiment described above is not limited to the connection structure where charging inlet 4 and charging connector 7 are connected to each other.

The illustrative embodiment described above is a specific example of aspects below.

The female terminal according to the embodiment described above is a female terminal connectable to a male terminal, at least one of the male terminal and the female terminal being coolable by a coolant, the female terminal including: a female terminal body electrically connectable to the male terminal; and a heat transfer member that transfers cold of the coolant, wherein the female terminal body includes a space forming portion forming a receiving space that receives the male terminal, and a contact portion protruding from the space forming portion into the receiving space, and coming into electrical contact with the male terminal, and the heat transfer member is electrically insulating and disposed in the receiving space, and comes into thermal contact with the male terminal and the space forming portion when the male terminal is inserted in the receiving space.

Since this female terminal includes the heat transfer member that comes into thermal contact with the male terminal and the space forming portion, the cold of the coolant is transferred to a counterpart terminal through the heat transfer member during electric current passage between the male terminal and the female terminal body. Cooling performance is thereby enhanced.

The heat transfer member may include an inner member that comes into contact with the male terminal, and an outer member interposed between the inner member and the space forming portion. In this case, the outer member is preferably made of an electrically insulating material.

The female terminal body may further include a connection portion continuous with the space forming portion and connected to a cable. The outer member may include a bottom wall disposed between the male terminal and the connection portion, and a circumferential wall continuous with a perimeter portion of the bottom wall and surrounding the inner member.

In this case, the bottom wall is preferably fixed to the connection portion.

In this manner, the position of the heat transfer member is determined with respect to the female terminal body.

Contact resistance between the male terminal and the space forming portion with the heat transfer member interposed therebetween is preferably more than or equal to 100 times as large as contact resistance between the male terminal and the female terminal body without the heat transfer member interposed therebetween.

In this manner, an electric current flows substantially only through the male terminal and the contact portion during electric current passage.

Although the embodiment of the present disclosure has been described, it should be understood that the embodiment disclosed herein is illustrative and nonrestrictive in every respect. The scope of the present disclosure is defined by the terms of the claims, and is intended to include any modifications within the scope and meaning equivalent to the terms of the claims.

## Claims

1. A female terminal (20) connectable to a male terminal (10),
at least one of the male terminal and the female terminal being coolable by a coolant,
the female terminal (20) comprising:
a female terminal body (100) electrically connectable to the male terminal; and
a heat transfer member (200) that transfers cold of the coolant, wherein
the female terminal body (100) includes
a space forming portion (120) forming a receiving space (S) that receives the male terminal, and
a contact portion (130) protruding from the space forming portion into the receiving space, and coming into electrical contact with the male terminal, and
the heat transfer member (200) is electrically insulating and disposed in the receiving space, and comes into thermal contact with the male terminal and the space forming portion when the male terminal is inserted in the receiving space.

2. The female terminal according to claim 1, wherein
the heat transfer member (200) includes
an inner member (210) that comes into contact with the male terminal, and
an outer member (220) interposed between the inner member and the space forming portion, and
the outer member is made of an electrically insulating material.

3. The female terminal according to claim 2, wherein
the female terminal body (100) further includes a connection portion (110) continuous with the space forming portion and connected to a cable, and
the outer member (220) includes
a bottom wall (222) disposed between the male terminal and the connection portion, and
a circumferential wall (224) continuous with a perimeter portion of the bottom wall and surrounding the inner member (210).

4. The female terminal according to claim 3, wherein
the bottom wall (222) is fixed to the connection portion (110).

5. The female terminal according to any one of claims 1 to 4, wherein
contact resistance between the male terminal and the space forming portion with the heat transfer member (200) interposed therebetween is more than or equal to 100 times as large as contact resistance between the male terminal and the female terminal body without the heat transfer member interposed therebetween.

6. A terminal connection structure comprising a male terminal (10) and a female terminal (20) connectable to the male terminal,
at least one of the male terminal and the female terminal being coolable by a coolant, wherein
the female terminal (20) includes
a female terminal body (100) electrically connectable to the male terminal, and
a heat transfer member (200) that transfers cold of the coolant,
the female terminal body (100) includes
a space forming portion (120) forming a receiving space that receives the male terminal, and
a contact portion (130) protruding from the space forming portion into the receiving space, and coming into electrical contact with the male terminal, and
the heat transfer member (200) is electrically insulating and disposed in the receiving space, and comes into thermal contact with the male terminal and the space forming portion when the male terminal is inserted in the receiving space.
